# EUROPÄISCHE PATENTSCHRIFT

(11) **EP 4 229 302 B1**
(45) Veröffentlichungstag und Bekanntmachung des Hinweises auf die Patenterteilung: **25.06.2025**
(21) Anmeldenummer: 22700136.9
(22) Anmeldetag: 07.01.2022
(51) Int. Cl.: F15B 1/10, F15B 1/14

(54) **HYDROSPEICHER**
HYDRAULIC ACCUMULATOR
ACCUMULATEUR HYDRAULIQUE

(30) Priorität: 14.01.2021 DE 102021000139
(43) Veröffentlichungstag der Anmeldung: 23.08.2023
(73) Patentinhaber: Hydac Technology GmbH, 66280 Sulzbach (DE)
(72) Erfinder: KLOFT, Peter, 56235 Ransbach-Baumbach (DE); KUSSEROW, Torsten, 54340 Thörnich (DE); LANGE, Norbert, Walter, 66113 Saarbrücken (DE); WEBER, Norbert, 66125 Saarbrücken (DE); KORT, Armin, Reinhold, 66292 Riegelsberg (DE)
(74) Vertreter: Bartels und Partner, Patentanwälte
(86) Internationale Anmeldenummer: PCT/EP2022/050248
(87) Internationale Veröffentlichungsnummer: WO 2022/152624

(56) Entgegenhaltungen:
- EP-A1- 1 370 772
- DE-A1- 2 139 367
- DE-B3- 10 355 435
- JP-A- H04 244 603
- US-A- 3 847 182

## Beschreibung

Die Erfindung betrifft einen Hydrospeicher, insbesondere Membranspeicher, mit den Merkmalen des Oberbegriffs des Patentanspruches 1.

Durch DE 10 2017 006 064 A1 ist ein Hydrospeicher bekannt, mit einem eine Längsachse definierenden Speichergehäuse, in dem eine aus elastomerem Material bestehende Membran als bewegliches Trennelement eine Flüssigkeitsseite von einer Gasseite trennt, wobei die Membran an ihrem Öffnungsrand an der Innenseite des Gehäuses festgelegt ist. Für den Erhalt einer schlanken Bauweise für den Hydrospeicher besitzt die Membran in einem unverformten Zustand eine in Richtung der Längsachse gemessene Länge, die zumindest das Zweifache des Durchmessers ihres Öffnungsrandes beträgt, wobei die unverformte Membran zwischen dem genannten Öffnungsrand und ihrem geschlossenen Endbereich mit geraden Mantellinien verläuft, die in Richtung auf den Endbereich konvergieren.

Das Speichergehäuse des Hydrospeichers weist sowohl auf der Gasseite als auch auf der Flüssigkeitsseite einen stutzenartigen Anschlusskörper auf, der jeweils mit einer Fluiddurchgangsstelle mittig versehen ist, die einen Fluidkanal ausbildet, der in Richtung der Längsachse des Hydrospeichers verläuft und zum einen einen Gasanschluss ausbildet zum Befüllen der Gasseite mit einem Arbeitsgas, wie Stickstoff, und zum anderen einen Flüssigkeitsanschluss bildet zum Anschließen des Hydrospeichers an eine hydraulische Anlage, die dann fluidführend, insbesondere Hydrauliköl führend, mit der Flüssigkeitsseite in Verbindung steht. Der jeweilige Anschlusskörper weist an seinem, der Gehäuseaußenseite zugewandten Anschlussbereich eine umlaufende Kehlung auf, die dazu dient einen Schweißzusatzwerkstoff aufzunehmen, der benötigt wird, um den jeweiligen Anschlusskörper dauerhaft mit dem Speichergehäuse im Rahmen eines Schmelzschweißverfahrens unter Erzeugen einer Kehlnaht zu verbinden.

Durch DE 10 2015 012 357 A1 ist ein weiterer Membranspeicher bekannt, bestehend aus mindestens zwei Gehäuseteilen eines Speichergehäuses, in dem ein Trennelement in Form einer Trennmembran zwei Medienräume voneinander separiert und mit mindestens einem, mit dem einen Gehäuseteil entlang einer Schweißnaht verbundenen Medien-Anschlusskörper. Der Anschlusskörper greift dabei, zumindest teilweise, in einen Aufnahmeraum ein, der in dem einen Gehäuseteil entlang einer Gehäuseöffnung als Fluiddurchgangsstelle gebildet ist, wobei die im Aufnahmeraum benachbart einander zugewandten Wandflächen von Speichergehäuseteil und dem Anschlusskörper mittels der Schweißnaht miteinander dauerhaft verbunden sind. Die angesprochene Schweißnaht lässt sich mittels Löten, Reibschweißen, Elektronenstrahlschweißen oder Laserstrahlschweißen, vorzugsweise ohne Schweißzusatzwerkstoff, realisieren. Anstelle einer außenseitig in die Kehlung einzubringende Kehlnaht wie in der DE 10 2017 006 064 A1 aufgezeigt, ist durch die innenliegende Schweißnaht in Form einer Glattnaht ein Formschluss gegen Querkräfte gewährleistet, was eine besonders sichere, dauerhafte Verbindung ermöglicht. Auch ist die insoweit innenliegende, gegenüber der Umgebung abgeschirmte Schweißnaht vor schädigenden Umgebungseinflüssen, die zu Korrosion führen könnten, geschützt. Die angesprochene Glatt-Schweißnaht ist jedoch von der Innenseite der Schalenform des Gehäuseteils zwischen deren benachbarter Innenwand und der insoweit in Eingriff befindlichen Außenwand des Anschlusskörpers herzustellen, was fertigungstechnisch entsprechend aufwendig und mithin kostenintensiv ist.

Durch DE 103 55 435 B3 ist ein Hydrospeicher, insbesondere Membranspeicher bekannt, mit einem Speichergehäuse bestehend aus einem oberen Gehäuseteil und einem unteren Gehäuseteil, die jeweils eine kreisrunde Schalenform mit zentraler Achse besitzen, die der Längsachse des Hydrospeichers entspricht, wobei ausgehend von einem konstanten Außendurchmesser die Gehäusewand des unteren Gehäuseteils zunächst von dem oberen Gehäuseteil weg und zur Längsachse des Hydrospeichers hin nach außen gewölbt ist und darauffolgend in eine beidseitig ebene und scheibenförmige Platte übergeht, durch die sich zentral der untere Fluidkanal erstreckt, und einem im Speichergehäuse angeordneten Trennelement, das zwei Medienräume voneinander separiert, wobei das Speichergehäuse mindestens eine Fluidanschlussstelle aufweist, die in einen benachbarten Medienraum ausmündet und die einen Anschlusskörper mit einer Fluiddurchgangsstelle aufweist, der mit dem Speichergehäuse über eine Schweißnaht verbunden ist, wobei der Anschlusskörper an seinem dem Speichergehäuse zugewandten Anschlussbereich eine ringförmige Außenumfangsfläche aufweist, wobei der Anschlusskörper bei stirnseitigem Aufsetzen auf das Speichergehäuse eine Übergangsstelle bildet, entlang der die Schweißnaht verläuft, wobei die Außenumfangsfläche des Anschlusskörpers an ihrem freien Ende in einen umlaufenden Rand übergeht, und wobei der umlaufende Rand in eine in die Stirnseite des Anschlusskörpers eingebrachte Vertiefung übergeht, die einen flach geneigten Ringkonus ausbildet, so dass dergestalt eine dünne Begrenzungsfläche zwischen dem Anschlusskörper und den benachbarten Wandteilen des Speichergehäuses entsteht.

US 3 847 182 und JP H04 244603 offenbaren einen gattungsgemäßen Hydrospeicher.

Ausgehend von diesem Stand der Technik liegt der Erfindung die Aufgabe zugrunde, unter Beibehalten der Vorteile der bekannten Lösungen, nämlich eine hochfeste Schweißverbindung zwischen Fluidanschlussstellen bildenden Anschlusskörpern und zugehörigen Speichergehäusen derart herzustellen, dass der Fertigungsaufwand entsprechend verringert ist. Eine dahingehende Aufgabe löst ein Hydrospeicher mit den Merkmalen des Patentanspruches 1 in seiner Gesamtheit.

Gemäß dem kennzeichnenden Teil des Patentanspruches 1 zeichnet sich die Erfindung gegenüber dem genannten Stand der Technik dadurch aus, dass die Vertiefung einen flachgeneigten Ringkonus mit einer Neigung von 4° bis 10°, vorzugsweise von etwa 6°, ausbildet. Insoweit ist keine Kehlung im Anschlusskörper auszubilden, die der späteren Aufnahme einer Kehlschweißnaht dient, die den Stoß oder die Übergangsstelle zwischen Anschlusskörper und benachbarter Gehäusewand mit überstehendem Rand in beiden Richtungen keilförmig umfasst.

Während bei der bekannten Hydrospeicher-Lösung nach der DE 10 2017 006 064 A1 die dahingehende Kehlnaht ohne Unterbrechung mit optimaler Einbrandtiefe auszuführen ist, was zu einem hohen Fertigungsaufwand führt, insbesondere weil in vielen Fällen zum Durchführen des Schmelzschweißens ein Schweißzusatzstoff erforderlich ist, ist bei der erfindungsgemäßen Lösung dies vermieden, da die Schweißnahtverbindung unmittelbar in der Übergangsstelle entsteht, zwischen Teilen der geschlossenen ringförmigen Außenumfangsfläche des Anschlussbereiches und der Oberseite des Speichergehäuses in diesem Verbindungsbereich. Da kein Schweißzusatzwerkstoff benötigt wird, ist darüber hinaus einer etwaigen Korrosionsgefahr wirksam begegnet und der ansonsten durch den Einbrand beim Herstellen der Kehlnaht gebildete Materialeingriff, in die miteinander zu verbindenden Komponenten unterbleibt, was ansonsten zu einer Materialschädigung im Verbindungsbereich führen kann. Die Schweißverbindung schließt mit der Übergangsstelle im Wesentlichen überstandsfrei ab und ist als dünne Schweißlinie konzipiert.

Ferner ist vorgesehen, dass die Außenumfangsfläche des Anschlusskörpers an ihrem freien Ende in einen umlaufenden Rand übergeht, von dem aus sich eine in die Stirnseite des Anschlusskörpers eingebrachte Vertiefung anschließt. Dergestalt entsteht eine dünne Begrenzungsfläche zwischen dem Anschlusskörper und den benachbarten Wandteilen des Speichergehäuses, die die linienhafte Übergangsstelle zum Einbringen der Schweißnaht bildet. Ist die Speichergehäusewand mit einer entsprechenden Krümmung versehen, folgt sie dem nach außen hin betrachteten, konvexen Wandverlauf, und es ist in den Anschlusskörper, ausgehend von dem umlaufenden Rand, nach innen hin in Richtung der Fluidanschlussstelle eine Vertiefung eingebracht, die dem konvexen Verlauf der Speichergehäusewand nachfolgt. Es kommt dann zu einer direkten Anlage von benachbarten Wandflächen des Anschlusskörpers und den zugeordneten Teilen der Speichergehäusewand, so dass mit Einbringen der Schweißnaht in den derart gebildeten Übergangsbereich über eine relativ große Fläche hinweg, die feste Verbindung zwischen den genannten Komponenten erfolgt. Dabei muss die Vertiefung nicht unmittelbar dem konvexen Wandverlauf nachfolgen, sondern ist aus einem flach geneigten Ringkonus gebildet, mit einer Neigung von 4° bis 10°, vorzugsweise von etwa 6°, was die Herstellung des Anschlusskörpers vereinfacht.

Bei einer vorteilhaften Ausführungsform des erfindungsgemäßen Hydrospeichers ist vorgesehen, dass das Speichergehäuse eine weitere Fluidanschlussstelle aufweist, die in den benachbarten anderen Medienraum ausmündet und die einen weiteren Anschlusskörper mit einer weiteren Fluiddurchgangsstelle aufweist, der mit dem Speichergehäuse über eine weitere Schweißnaht verbunden ist, wobei der weitere Anschlusskörper an seinem dem Speichergehäuse zugewandten Anschlussbereich eine ringförmige Außenumfangsfläche aufweist, wobei der weitere Anschlusskörper bei stirnseitigem Aufsetzen auf das Speichergehäuse eine Übergangsstelle bildet, entlang der die Schweißnaht verläuft, wobei die Außenumfangsfläche des weiteren Anschlusskörpers an ihrem freien Ende in einen umlaufenden Rand übergeht, von dem aus sich eine eben verlaufende Anlagefläche in Richtung der weiteren Fluidanschlussstelle anschließt.

Von der Betriebsdrucksituation des jeweiligen Hydrospeichers gesehen, ist es vorteilhaft, dass die eben verlaufende Anlagefläche des weiteren Anschlusskörpers auf eine ebenso eben verlaufende Speichergehäusewand aufgesetzt ist, die die weitere Fluidanschlussstelle, insbesondere für den Durchtritt von Flüssigkeit, wie Hydrauliköl, umgibt. Hingegen ist der Gasvorrat im Speichergehäuse des Hydrospeichers im Rahmen einer verlässlichen Betriebsdruckaufnahme im Bereich der Fluidanschlussstelle für das Arbeitsgas nach außen hin gekrümmt respektive konvex ausgebildet, so dass dahingehend in den festzuschweißenden Anschlusskörper die korrespondierende Vertiefung aufgenommen ist.

Um hohe Schweißenergien bereitstellen zu können, ist bevorzugt vorgesehen, dass der umlaufende Rand der Anschlusskörper Teil der Schweißnahtverbindung zwischen dem Anschlusskörper und dem benachbarten Speichergehäuse ist, und dass die Schweißnahtverbindung mittels eines Lasers oder im Rahmen eines Elektronenstrahlschweißverfahrens hergestellt ist.

Für die Herstellung entsprechender Fluidverbindungen ist bei einem bevorzugten Hydrospeicher vorgesehen, dass einer der Anschlusskörper außen- oder innenumfangsseitig im Bereich der Fluiddurchgangsstelle mit einer entsprechenden Gewindestrecke versehen ist. Bei einer weiteren bevorzugten Ausführungsform des erfindungsgemäßen Hydrospeichers ist vorgesehen, dass das Speichergehäuse zweiteilig, vorzugsweise aus Schalenteilen bestehend, ausgebildet ist und dass die Speichergehäuseteile an ihren benachbarten Stirnseiten mit demselben Schweißverfahren verbunden sind wie die Anschlusskörper mit dem Speichergehäuse. Dergestalt lässt sich von außen her, mit nur einer Schweißeinrichtung, beispielsweise mittels eines Lasers, alle benötigten Schweißverbindungen am Speichergehäuse herstellen.

Ein vorteilhaftes Herstellverfahren für solche Schweißverbindungen bei einem Hydrospeicher ist dadurch charakterisiert, das ein Laser- oder Elektronenstrahl rechtwinklig und umlaufend die Schweißnahtverbindung zwischen dem Rand des Anschlusskörpers und der benachbarten Speichergehäusewand herstellt, wobei vorzugsweise die Schweißeinrichtung stationär angeordnet ist und der Hydrospeicher als rotationssymmetrisches Bauteil um seine Längsachse bewegbar geführt ist, wobei die Drehgeschwindigkeit des Speichers auf die Schweißgeschwindigkeit der Herstelleinrichtung anzugleichen ist.

Da die Schweißnaht von der Außenumfangsseite des Speichergehäuses nebst Anschlusskörper zwanglos hergestellt werden kann, lässt sich zielgerichtet von außen her die Schweißnaht erzeugen, was fertigungstechnisch wesentlich einfacher und kostengünstiger ist, als wenn man wie in der DE 10 2015 012 357 A1 aufgezeigt, von der Innenseite des jeweiligen schalenartigen Speichergehäuseteils die Schweißverbindung in Form der Glattnaht herzustellen hat. Aufgrund des dünnen, linienförmigen Schweißnahtverlaufs lässt sich die Schweißnaht zeitnah realisieren, so dass insbesondere in der Massenteilherstellung in hohem Maß Einsparungen im Rahmen der Fertigung erreicht sind.

Im Folgenden wird die erfindungsgemäße Lösung anhand eines Ausführungsbeispiels nach der Zeichnung näher erläutert. Dabei zeigen in prinzipieller und nicht maßgeblicher Darstellung die
- Fig. 1 und 2: einmal im Längsschnitt, einmal in Ansicht eine Ausführungsform des erfindungsgemäßen Hydrospeichers;

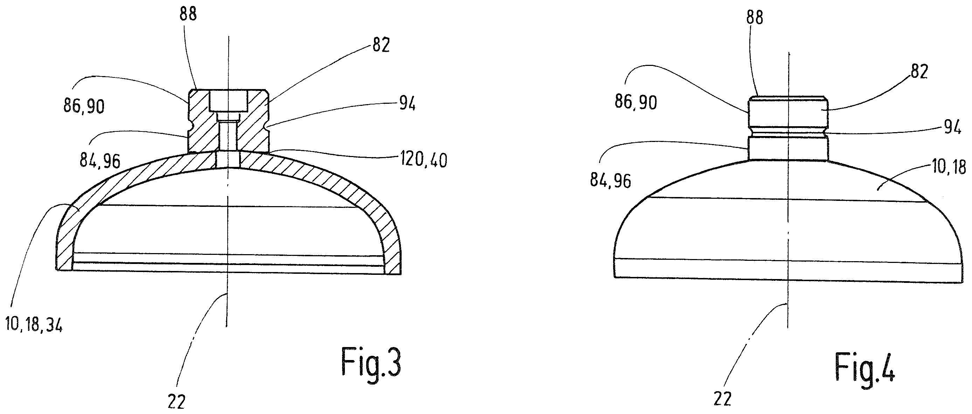

- Fig. 3 und 4: einmal im Längsschnitt, einmal in Ansicht die obere Gehäusewandschale des Hydrospeichers nach den Figuren 1 und 2 mit aufgesetztem festgeschweißtem Anschlusskörper auf der Gasseite; und

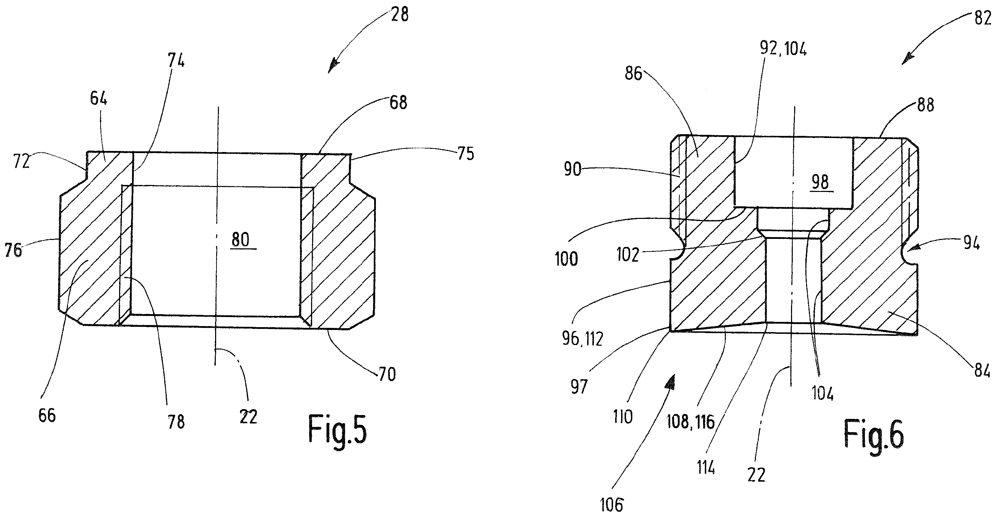

- Fig. 5 und 6: beides Mal in Längsschnitt-Darstellung, den auf der Flüssigkeitsseite verwendeten Anschlusskörper nach den Figuren 1 und 2 bzw. den Anschlusskörper auf der Gasseite gemäß der Darstellung nach den Figuren 3 und 4.

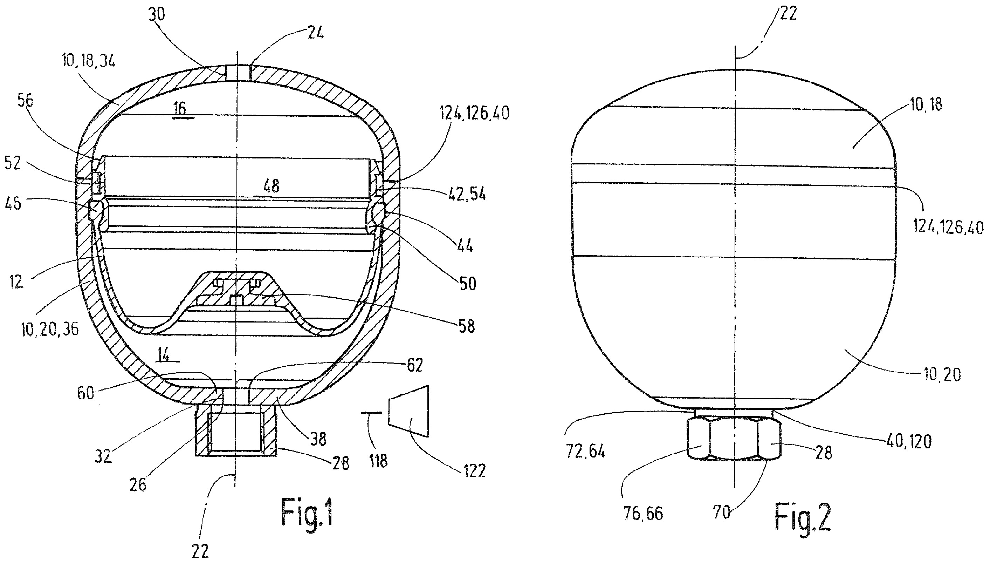

Bei dem in der Fig. 1 und 2 dargestellten Hydrospeicher handelt es sich um einen sogenannten Membranspeicher mit einem in einem als Ganzes mit 10 bezeichneten Speichergehäuse angeordneten Trennelement 12 in Form einer Membran. Diese trennt das Gehäuse 10 in seinem Inneren in einen Medienraum 14 in Form eines Fluidraums zur Bevorratung einer Flüssigkeit, insbesondere Hydrauliköl, und einen weiteren Medienraum 16 in Form eines Gasraums zur Bevorratung eines Arbeitsgases, insbesondere Stickstoff-gas. Das Gehäuse 10 besteht, gesehen auf die Fig. 1, aus einem oberen Gehäuseteil 18 und einem unteren Gehäuseteil 20, die jeweils eine kreisrunde Schalenform mit zentraler Achse 22 besitzen, die der Längsachse des Hydrospeichers entspricht. Das obere Gehäuseteil 18 besitzt eine flachere Schalenform als das untere Gehäuseteil 20. An dem dem Fluidraum 14 entgegengesetzten Ende des Speichergehäuses 10, also an dem dem Gasraum 16 zugehörigen Ende, weist das obere Gehäuseteil 18, zur Achse 22 konzentrisch, eine obere Fluidanschlussstelle 24 auf. Die obere Fluidanschlussstelle 24 kann nach Befüllen des Gasraumes 16 mittels eines in den Figuren nicht dargestellten Stopfens oder einem Lot verschlossen werden. An dem unteren Gehäuseteil 20 ist, konzentrisch zur Achse 22, eine untere Fluidanschlussstelle 26 vorgesehen, bei der ein unterer Anschlusskörper 28 als Ölanschluss angebracht ist, über den der Speicher an einem (nicht dargestellten) Hydrauliksystem anschließbar ist.

Das obere 18 und das untere 20 Gehäuseteil weisen einen zentralen oberen 30 bzw. unteren 32 Fluidkanal auf, der sich jeweils entlang der Längsachse 22 ausgehend von der oberen Fluidanschlussstelle 24 zentral durch eine Speichergehäusewand 34 des oberen Gehäuseteils 18 erstreckt und in dem Gasraum 16 ausmündet bzw. ausgehend von der unteren Fluidanschlussstelle 26 zentral durch eine Speichergehäusewand 36 des unteren Gehäuseteils 20 erstreckt und in dem Fluidraum 14 ausmündet. Die Gehäusewand 34 des oberen Gehäuseteils 18 verläuft ausgehend von einem konstanten Außendurchmesser von dem unteren Gehäuseteil 20 weg und zur Längsachse 22 des Hydrospeichers hin bis zu dem zentralen oberen Fluidkanal 30 nach außen gewölbt. Ausgehend von einem konstanten Außendurchmesser verläuft die Gehäusewand 36 des unteren Gehäuseteils 20 zunächst von dem oberen Gehäuseteil 18 weg und zur Längsachse 22 des Hydrospeichers hin nach außen gewölbt und geht darauffolgend in eine beidseitig ebene und scheibenförmige Platte 38 über, durch die sich zentral der untere Fluidkanal 32 erstreckt.

Das obere 18 und das untere 20 Gehäuseteil, die längs einer Schweißnahtstelle 40 aneinanderstoßen, sind mittels eines Laser- oder eines Elektronenstrahlschweißverfahrens miteinander verbunden.

Im Bereich der Nahtstelle 40 ist an der Innenwand des Speichergehäuses 10 ein Schutzring 42 in Form eines metallischen Flachrings festgelegt. Für die Festlegung der Membran 12 im Speichergehäuse 10 ist von dem Schutzring 42 beabstandet in der Innenwand des unteren Gehäuseteils 20 eine ringnutartige Einkerbung 44 ausgebildet. Die Einkerbung 44 bildet einen Sitz für einen verdickten, umfänglichen Randwulst 46 der Membran 12.

Zur Sicherung des Eingriffs des Randwulstes 46 mit der Einkerbung 44 ist ein Haltering 48 vorgesehen, der ein Halteteil 50 aufweist, das eine vom Außenumfang des Halterings 48 nach einwärts versetzte, teilweise Umfassung der Innenseite des Randwulstes 46 bildet. Vom Halteteil 50, axial in Richtung zum oberen Gehäuseteil 18 verlaufend, weist der Haltering 48 ein kreisringförmiges Zylinderteil 52 auf, das sich über den Schweißbereich 40 zwischen den beiden Gehäuseteilen 18, 20 hinaus erstreckt. Außenumfangsseitig bildet das Zylinderteil 52 eine Ringnut 54 als Sitz für den Schutzring 42. Dieser ist durch Verschieben über Schrägflächen 56 an dem freien Ende des Zylinderteils in die Ringnut 54 einschnappbar. Zur Montage ist die Membran 12 bei geöffnetem Speichergehäuse 10 zusammen mit dem Haltering 48 und dem Schutzring 42 in das untere Gehäuseteil 20 einsetzbar, wobei bei der eingesetzten Position der Schutzring 42 in eine den Schweißbereich 40 überdeckende Lage kommt.

Die Fig. 1 zeigt den Membranspeicher in einem Betriebszustand, bei dem sich die Membran 12 in einer Zwischenstellung befindet, bei der an beiden Seiten der Membran 12 Druck-Gleichgewicht herrscht, weil das an dem den Ölanschluss bildenden unteren Anschlusskörper 28 angeschlossene, jedoch nicht dargestellte Hydrauliksystem im Fluidraum 14 einen Fluiddruck erzeugt, der dem im Gasraum 16 herrschenden Druck entspricht. Bei Zuständen, bei denen im Fluidraum 14 nur ein geringer Öldruck herrscht oder dieser fehlt, bewegt sich die Membran 12, bei Blickrichtung entsprechend der Figur, nach unten und legt sich an die Innenseite des unteren Gehäuseteils 20 an, wobei die Membran 12 mit einem an ihrem zentralen Flächenbereich befindlichen Ventilkörper 58 einen einen Ventilsitz bildenden Rand 60 der Einmündung 62 des unteren Fluidkanals 32 in den Fluidraum 14 überdeckt und somit an der Einmündung 62 des Fluidkanals 32 in den Fluidraum 14 eine Ventilanordnung bildet.

Bevorzugt ist die untere Fluidanschlussstelle 26 nicht durch einen Stopfen oder Lot verschlossen, sondern weist einen unteren Anschlusskörper 28 auf, der gebildet ist aus einem an dem unteren Gehäuseteil 20 anliegenden Verbindungsteil 64 und einem sich in Richtung von dem unteren Gehäuseteil 20 weg einstückig an das Verbindungsteil 64 anschließenden Anschlussteil 66.

Eine eine Anlagefläche für das untere Gehäuseteil 20 bildende erste Stirnseite 68 des Verbindungsteils 64 und eine der ersten Stirnseite 68 gegenüberliegende zweite Stirnseite 70 des Anschlussteils 66 des unteren Anschlusskörpers 28 sind jeweils eben und zur Längsachse 22 des Hydrospeichers senkrecht ausgerichtet. Die erste Stirnseite 68 geht an ihrem radial äußeren und inneren Ende jeweils in eine zylindrische, ringförmige und ausnehmungsfreie Außen- 72 bzw. Innenumfangsfläche 74 des Verbindungsteils 64 über, die koaxial zur Längsachse 22 des Hydrospeichers ausgerichtet sind. Ein dem unteren Gehäuseteil 20 zugewandter ringförmiger Endbereich der Außenumfangsfläche 72 des Verbindungsteils 64 bildet einen Rand 75, der Teil einer Schweißnahtverbindung 40 zwischen dem Anschlusskörper 28 und dem unteren Gehäuseteil 20 ist. In Richtung von dem unteren Gehäuseteil 20 weg schließt sich an die Außenumfangsfläche 72 des Verbindungsteils 64 ein Außensechskant 76 des Anschlussteils 66 und an die Innenumfangsfläche 74 des Verbindungsteils 64 ein Innengewinde 78 des Anschlussteils 66 zum Eingreifen eines Außengewindes einer in den Figuren nicht dargestellten Fluidleitung an, die jeweils an ihrem dem unteren Gehäuseteil 20 abgewandten Ende in die zweite Stirnseite 70 des Anschlussteils 66 übergehen. Durch die dahingehend hohle Ausgestaltung des unteren Anschlusskörpers 28 ist eine zentrale Fluiddurchgangsstelle 80 zum Durchtritt von Fluid durch den unteren Anschlusskörper 28 gebildet. Der kleinste Innendurchmesser der Fluiddurchgangsstelle 80 ist größer als, insbesondere in etwa 1,8 Mal so groß wie, der Innendurchmesser des unteren Fluidkanals 32 durch das untere Gehäuseteil 20. Der Durchmesser der scheibenförmigen Platte 38 des unteren Gehäuseteils 20 ist größer als der Außendurchmesser des unteren Anschlusskörpers 28 zumindest im Bereich seines Verbindungsteils 64.

Die obere Fluidanschlussstelle 24 weist einen oberen kreiszylindrischen Anschlusskörper 82 auf. Bei diesem handelt es sich um einen Gasanschluss üblicher Art mit einem inneren, in den Figuren nicht näher dargestellten Füllventil, über das der Gasraum 16 mit einem Arbeitsgas, insbesondere Stickstoff-Gas, vorfüllbar ist.

Der Anschlusskörper 82 ist gebildet aus einem an dem oberen Gehäuseteil 18 anliegenden weiteren Verbindungsteil 84 und einem sich in Richtung von dem oberen Gehäuseteil 18 weg einstückig an das weitere Verbindungsteil 84 anschließenden weiteren Anschlussteil 86.

Eine dem oberen Gehäuseteil 18 abgewandte Stirnseite 88 des weiteren Anschlussteils 86 des oberen kreiszylindrischen Anschlusskörpers 82 ist ringförmig und eben ausgebildet sowie senkrecht zur Längsachse 22 des Hydrospeichers ausgerichtet. An ihrem radial äußeren Ende geht die dem oberen Gehäuseteil 18 abgewandte Stirnseite 88 des weiteren Anschlussteils 86 des oberen Anschlusskörpers 82 in ein Außengewinde 90 über und an ihrem radial inneren Ende in eine kreiszylindrische, ringförmige und ausnehmungsfreie Innenumfangsfläche 92 des weiteren Anschlussteils 86. Das Außengewinde dient zum Eingreifen eines Innengewindes einer in den Figuren nicht dargestellten Fluidleitung oder einer Schraubkappe aus Kunststoff zur Abdeckung des oberen Anschlusskörpers 82. In Richtung zu dem oberen Gehäuseteil 18 hin schließt sich an das Außengewinde 90 eine, im Querschnitt gesehen, nasenförmige Ringaussparung 94 des Außenumfangs des oberen Anschlusskörpers 82 an, die senkrecht zur Längsachse 22 des Hydrospeichers ausgerichtet, den oberen Anschlusskörper 82 vollumfänglich umläuft und einen Auslauf des Außengewindes 90 des oberen Anschlusskörpers 82 bildet. In Richtung zu dem oberen Gehäuseteil 18 schließt sich an die nasenförmige Aussparung 94 eine kreiszylindrische, ringförmige und ausnehmungsfreie Außenumfangsfläche 96 des weiteren Verbindungsteils 84 an. Ein dem oberen Gehäuseteil 18 zugewandter ringförmiger Endbereich der Außenumfangsfläche 96 des weiteren Verbindungsteils 84 bildet einen Rand 97, der Teil einer Schweißnahtverbindung 40 zwischen dem Anschlusskörper 82 und dem oberen Gehäuseteil 18 ist. Der Innendurchmesser einer zentralen Fluiddurchgangsstelle 98 des oberen Anschlusskörpers 82 verringert sich ausgehend von der dem oberen Gehäuseteil 18 abgewandten Stirnseite 88 in Richtung des oberen Gehäuseteils 18 unter Ausbildung einer Stufe 100 und einem darauffolgenden konisch zulaufenden Übergangsbereich 102. Zwischen der dem oberen Gehäuseteil 18 abgewandten Stirnseite 88 und der Stufe 100, zwischen der Stufe 100 und dem Übergangsbereich 102 und zwischen dem Übergangsbereich 102 und dem dem oberen Gehäuseteil 18 zugewandten Ende 114 der Fluiddurchgangsstelle 98 ist jeweils eine kreiszylindrische, ringförmige und ausnehmungsfreie Innenumfangsfläche 104 der Fluiddurchgangsstelle 98 vorgesehen.

In eine dem oberen Gehäuseteil 18 zugewandte Seite 106 des oberen zylindrischen Anschlusskörpers 82 ist eine Vertiefung 108 eingebracht. Das dem dem oberen Gehäuseteil 82 zugewandte Ende 110 der Außenwand 112 des oberen Anschlusskörpers 82 übersteht das dem oberen Gehäuseteil 18 zugewandte Ende 114 der Fluiddurchgangsstelle 98, das das Maximum der Vertiefung 108 bildet. Das Minimum der Vertiefung 108 ist in direktem Anschluss an das dem oberen Gehäuseteil 18 zugewandte Ende 110 der Außenwand 112 des oberen Anschlusskörpers 82 vorgesehen. Zwischen dem dem oberen Gehäuseteil 18 zugewandten Ende 110 der Außenwand 112 des oberen Anschlusskörpers 82 und dem dem oberen Gehäuseteil 18 zugewandten Ende 114 der Fluiddurchgangsstelle 98 verläuft der Boden 116 der Vertiefung 108 in Richtung der Längsachse 22 des Hydrospeichers und von dem unteren Gehäuseteil 20 weg konisch zu. Der Winkel der Konizität des Bodens 116 gegenüber einer senkrecht zur Längsachse 22 des Hydrospeichers ausgerichteten fiktiven Ebene ist angepasst an den gewölbten Verlauf der Außenwand des oberen Gehäuseteils 18 im Bereich um den oberen Fluidanschluss 30 und beträgt vorzugsweise in etwa 6 Grad.

Zum Verschweißen des jeweiligen Gehäuseteils 18, 20 mit dem zugeordneten Anschlusskörper 28, 82 wird die eine Anlagefläche bildende ebene erste Stirnseite 68 des Verbindungsteils 64 des unteren Anschlusskörpers 28 auf die scheibenförmige Platte 38 des unteren Gehäuseteils 20 von außen und koaxial ausgerichtet aufgesetzt, so dass die ebene erste Stirnseite 68 des Verbindungsteils 64 des unteren Anschlusskörpers 28 mit ihrer gesamten Fläche in Kontakt mit der Platte 38 ist. Zudem wird das weitere Verbindungsteil 84 des oberen Anschlusskörpers 82 mit seiner konisch zulaufenden Vertiefung 108 auf das gewölbte obere Gehäuseteil 18 von außen und koaxial ausgerichtet aufgesetzt, wobei das obere Gehäuseteil 18 mit seiner gewölbten Außenwand in die Vertiefung 108 eingreift. Dabei ist der Boden 116 mit einem Teil seiner Gesamtfläche ringlinien- oder ringförmig, insbesondere im Bereich des Randes 97, in Anlage mit dem oberen Gehäuseteil 18. Darauffolgend wirkt ein senkrecht zur Längsachse 22 des Hydrospeichers ausgerichteter Laser- oder Elektronenstrahl 118 auf eine jeweilige linien- und ringförmige Übergangsstelle 120 zwischen dem Rand 75, 97 der Außenumfangsfläche 72, 96 des Verbindungsteils 64, 84 des jeweiligen Anschlusskörpers 28, 82 und der Außenwand des jeweiligen Speichergehäuseteils 18, 20 ein und stellt dort, insbesondere durch ein Aufschmelzen des Anschlusskörpers zumindest an dem Rand 75, 97 und/oder der Außenwand des jeweiligen Speichergehäuseteils 18, 20 zumindest im Bereich dieses Randes 75, 97, jeweils eine Schweißnaht 40 her, mittels der der jeweilige Anschlusskörper 28, 82 mit dem benachbarten Gehäuseteil 18, 20 fest verbunden ist. Dabei ist der Rand 75, 97 des jeweiligen Anschlusskörpers 28, 82 und/oder die Außenwand des jeweiligen Speichergehäuseteils 18, 20 Teil der Schweißnahtverbindung 40. Zudem wird der Schweißvorgang schweißzusatzwerkstofffrei durchgeführt.

Die den Strahl 118 abgebende Schweißeinrichtung 122 ist stationär angeordnet und der rotationssymmetrische Hydrospeicher wird mit auf die Schweißgeschwindigkeit der Schweißeinrichtung 122 angepasster Drehgeschwindigkeit um seine Längsachse 22 gedreht.

Die beiden Gehäuseteile 18, 20 sind mittels desselben Schweißverfahrens an ihren einander zugewandten Stirnseiten 124 an ihren offenen Enden miteinander verschweißt. Bei dem Durchführen des Verschweißens zum Schließen des Gehäuses 10 wird der Schutzring 42 an der Innenseite des Speichergehäuses 10 im Verbindungsbereich 126 der beiden Gehäuseteile 18, 20 festgeschweißt und bildet eine thermische Abschirmung gegenüber dem Haltering 48. Dadurch ist der Haltering 48 aus einem strukturfesten Kunststoffmaterial rationell und kostengünstig als Spritzgussteil herstellbar.

## Patentansprüche

1. Hydrospeicher, insbesondere Membranspeicher, mit einem Speichergehäuse (10) und einem darin angeordneten Trennelement (12), das zwei Medienräume (14, 16) voneinander separiert, wobei das Speichergehäuse (10) mindestens eine Fluidanschlussstelle (24) aufweist, die in einen benachbarten Medienraum (16) ausmündet und die einen ersten Anschlusskörper (82) mit einer Fluiddurchgangsstelle (98) aufweist, der mit dem Speichergehäuse (10) über eine Schweißnaht (40) verbunden ist, wobei der Anschlusskörper (82) an seinem dem Speichergehäuse (10) zugewandten Anschlussbereich eine ringförmige Außenumfangsfläche (96) aufweist, wobei der Anschlusskörper (82) bei stirnseitigem Aufsetzen auf das Speichergehäuse (10) eine Übergangsstelle (120) bildet, entlang der die Schweißnaht (40) verläuft, und wobei die Außenumfangsfläche (96) des Anschlusskörpers (82) an ihrem freien Ende in einen umlaufenden Rand (97) übergeht, von dem aus sich eine in die Stirnseite (106) des Anschlusskörpers (82) eingebrachte Vertiefung (108) anschließt, wobei der Verlauf der Vertiefung (108) im Anschlusskörper (82) einer gekrümmt verlaufenden Speichergehäusewand (34) angepasst ist, die im Bereich der Schweißnaht (40), im Querschnitt gesehen, mit einer konvexen Wölbung versehen ist, und die zumindest teilweise in die Vertiefung (108) eingreift und die die Fluidanschlussstelle (24), insbesondere für den Durchtritt eines Arbeitsgases, wie Stickstoffgas, umgibt, und **dadurch gekennzeichnet, dass** die Vertiefung (108) einen flachgeneigten Ringkonus (116) mit einer Neigung von 4° bis 10°, vorzugsweise von etwa 6°, ausbildet.

2. Hydrospeicher nach Anspruch 1, **dadurch gekennzeichnet, dass** das Speichergehäuse (10) eine weitere Fluidanschlussstelle (26) aufweist, die in den benachbarten anderen Medienraum (14) ausmündet, und die einen weiteren Anschlusskörper (28) mit einer weiteren Fluiddurchgangsstelle (80) aufweist, der mit dem Speichergehäuse (10) über eine weitere Schweißnaht (40) verbunden ist, wobei der weitere Anschlusskörper (28) an seinem dem Speichergehäuse (10) zugewandten Anschlussbereich eine ringförmige Außenumfangsfläche (72) aufweist, wobei der weitere Anschlusskörper (28) bei stirnseitigem Aufsetzen auf das Speichergehäuse (10) eine Übergangsstelle (120) bildet, entlang der die Schweißnaht (40) verläuft, wobei die
Außenumfangsfläche (72) des weiteren Anschlusskörpers (28) an ihrem freien Ende in einen umlaufenden Rand (75) übergeht, von dem aus sich eine eben verlaufende Anlagefläche (68) in Richtung der weiteren Fluidanschlussstelle (26) anschließt.

3. Hydrospeicher nach Anspruch 2, **dadurch gekennzeichnet, dass** die eben verlaufende Anlagefläche (68) des weiteren Anschlusskörpers (28) auf eine ebenso eben verlaufende Speichergehäusewand (38) aufgesetzt ist, die die weitere Fluidanschlussstelle (26), insbesondere für den Durchtritt von Flüssigkeit, wie Hydrauliköl, umgibt.

4. Hydrospeicher, nach Anspruch 2 oder 3, **dadurch gekennzeichnet, dass** der umlaufende Rand (75, 97) der Anschlusskörper (28, 82) Teil der Schweißnahtverbindung (40) zwischen Anschlusskörper (28, 82) und Speichergehäuse (10) ist und dass die Schweißnahtverbindung (40) mittels eines Lasers- oder eines Elektronenstrahlschweißverfahrens hergestellt ist.

5. Hydrospeicher, nach einem der Ansprüche 2 bis 4, **dadurch gekennzeichnet, dass** einer der Anschlusskörper (28, 82) außen- oder innenumfangsseitig im Bereich der Fluiddurchgangsstelle (80, 98) zwecks Anschließen einer Fluidleitung eine Gewindestrecke (78, 90) als Teil eines Anschlussteils (66, 86) aufweist, die von einem Verbindungsteil (64, 84) des Anschlusskörpers (28, 82) abgesetzt ist, das zumindest teilweise dem Anbringen der Schweißnaht (40) dient und das die ringförmige Außenumfangsfläche (72, 96) aufweist.

6. Hydrospeicher, nach einem der Ansprüche 2 bis 5, **dadurch gekennzeichnet, dass** die Speichergehäusewand (36) im Bereich der Schweißnaht (40) des weiteren Anschlusskörpers (28), im Querschnitt gesehen, geradlinig verläuft.

7. Hydrospeicher, nach einem der Ansprüche 2 bis 6, **dadurch gekennzeichnet, dass** das Speichergehäuse (10) zweiteilig, vorzugsweise aus Schalenteilen bestehend, ausgebildet ist, und dass die Speichergehäuseteile (18, 20) an ihren benachbarten Stirnseiten (124) mit demselben Schweißverfahren verbunden sind wie die Anschlusskörper (28, 82) mit dem Speichergehäuse (10).

## Claims

1. Hydraulic accumulator, in particular a diaphragm accumulator, having an accumulator housing (10) and a separating element (12) which is arranged therein and separates two media chambers (14, 16) from each other, the accumulator housing (10) comprising at least one fluid connection point (24) which opens into an adjacent media chamber (16) and has a first connection body (82) with a fluid passage point (98) that is connected to the accumulator housing (10) via a welding seam (40), wherein the connection body (82) has an annular outer circumferential surface (96) on its connection region facing the accumulator housing (10), wherein when the end face of the connection body (82) is placed on the accumulator housing (10), the connection body (82) forms a transition point (120), along which the welding seam (40) runs, and wherein the outer circumferential surface (96) of the connection body (82) transitions into a peripheral edge (97) at its free end, from which edge a depression (108) made in the end face (106) of the connection body (82) is connected, the course of the depression (108) in the connection body (82) being adapted to a curved accumulator housing wall (34), which has a convex curvature in the region of the welding seam (40), viewed in cross-section, and which at least partially engages in the depression (108) and which surrounds the fluid connection point (24), in particular for the passage of a working gas, such as nitrogen gas, and **characterised in that** the depression (108) forms an annular cone (116) with a shallow inclination of 4° to 10°, preferably approximately 6°.

2. Hydraulic accumulator according to claim 1, **characterised in that** the accumulator housing (10) has a further fluid connection point (26), which opens into the other adjacent media chamber (14) and which has a further connection body (28) with a further fluid passage point (80) that is connected to the accumulator housing (10) via a further welding seam (40), wherein the further connection body (28) has an annular outer circumferential surface (72) on its connection region facing the accumulator housing (10), wherein when the end face of the further connection body (28) is placed on the accumulator housing (10), the further connection body (28) forms a transition point (120), along which the welding seam (40) runs, wherein the outer circumferential surface (72) of the further connection body (28) transitions at its free end into a peripheral edge (75), from which a flat contact surface (68) is connected in the direction of the further fluid connection point (26).

3. Hydraulic accumulator according to claim 2, **characterised in that** the flat contact surface (68) of the further connection body (28) is placed on an accumulator housing wall (38) that is also flat, said wall surrounding the further fluid connection point (26), particularly for the passage of liquid such as hydraulic oil.

4. Hydraulic accumulator according to either claim 2 or claim 3, **characterised in that** the peripheral edge (75, 97) of the connection bodies (28, 82) is part of the welding seam joint (40) between the connection body (28, 82) and accumulator housing (10) and **in that** the welding seam joint (40) is produced using a laser or electron beam welding method.

5. Hydraulic accumulator according to any of claims 2 to 4, **characterised in that** the outer or inner circumferential side of the connection body (28, 82) in the region of the fluid passage point (80, 98) comprises a threaded part (78, 90) as part of a connecting part (66, 86) for the purpose of connecting a fluid line, said threaded part being offset from a connecting element (64, 84) of the connection body (28, 82), which is at least partly used to apply the welding seam (40) and comprises the annular outer circumferential surface (72, 96).

6. Hydraulic accumulator according to any of claims 2 to 5, **characterised in that** the accumulator housing wall (36) runs in a straight line in the region of the welding seam (40) of the further connection body (28), viewed in cross-section.

7. Hydraulic accumulator according to any of claims 2 to 6, **characterised in that** the accumulator housing (10) is formed in two parts, preferably consisting of shell parts, and **in that** the accumulator housing parts (18, 20) are connected, on their adjacent end faces (124) with the same welding method as the connection bodies (28, 82) to the accumulator housing (10).

## Revendications

1. Accumulateur hydraulique, en particulier accumulateur à membrane, comprenant une enveloppe (10) d'accumulateur et un élément (12) de séparation, qui y est monté et qui sépare deux espaces (14, 16) pour des fluides l'un de l'autre, dans lequel l'enveloppe (10) de l'accumulateur a au moins un point (24) de raccordement pour un fluide, qui débouche dans un espace (16) voisin pour des fluides et qui a un premier corps (82) de raccordement ayant un point (98) de passage de fluide, qui est relié à l'enveloppe (10) de l'accumulateur par un cordon (40) de soudure, dans lequel le corps (82) de raccordement a, sur sa partie de raccordement tournée vers l'enveloppe (10) de l'accumulateur, une surface (96) périphérique extérieure annulaire, dans lequel le corps (82) de raccordement forme, lorsqu'il est mis du côté frontal sur l'enveloppe (10) de l'accumulateur, un point (120) de transition suivant lequel le cordon (40) de soudure s'étend, et dans lequel la surface (96) périphérique extérieure du corps (82) de raccordement se transforme, à son extrémité libre, en un bord (97) faisant le tour, auquel se raccorde un creux (108) ménagé dans le côté (106) frontal du corps (82) de raccordement, dans lequel le tracé du creux (108) dans le corps (82) de raccordement est adapté à une paroi (34) de l'enveloppe de l'accumulateur s'étendant de manière incurvée, qui, dans la partie du cordon (40) de soudure, considéré en coupe transversale, est pourvue d'une courbure convexe et qui pénètre au moins en partie dans le creux (108) et qui entoure le point (24) de raccordement pour un fluide, en particulier pour le passage d'un gaz de travail, comme de l'azote gazeux, et **caractérisé en ce que** le creux (108) forme un cône (116) annulaire incliné à plat ayant une inclinaison de 4° à 10°, de préférence d'environ 6°.

2. Accumulateur hydraulique suivant la revendication 1, **caractérisé en ce que** l'enveloppe (10) de l'accumulateur a un autre point (26) de raccordement de fluide, qui débouche dans l'autre espace (14) voisin pour des fluides et qui a un autre corps (28) de raccordement ayant un autre point (80) de passage de fluide, qui est relié à l'enveloppe (10) de l'accumulateur par un autre cordon (40) de soudure, dans lequel l'autre corps (28) de raccordement a, à sa partie de raccordement tournée vers l'enveloppe (10) de l'accumulateur, une surface (72) périphérique extérieure annulaire, dans lequel l'autre corps (28) de raccordement forme, lorsqu'il est mis du côté frontal sur l'enveloppe (10) de l'accumulateur, un point (120) de transition, suivant lequel le cordon (40) de soudure s'étend, dans lequel la surface (72) périphérique extérieure de l'autre corps (28) de raccordement se transforme, à son extrémité libre, en un bord (75) faisant le tour, auquel une surface (68) de contact s'étendant de manière pleine se raccorde dans la direction de l'autre point (26) de raccordement de fluide.

3. Accumulateur hydraulique suivant la revendication 2, **caractérisé en ce que** la surface (68) de contact s'étendant de manière plane de l'autre corps (28) de raccordement est mise sur une paroi (38) de l'enveloppe de l'accumulateur s'étendant également de manière plane, qui entoure l'autre point (26) de passage de fluide, en particulier pour le passage de liquide, comme de l'huile hydraulique.

4. Accumulateur hydraulique suivant la revendication 2 ou 3, **caractérisé en ce que** le bord (75, 97) faisant le tour des corps (28, 82) de raccordement fait partie de la liaison (40) par cordon de soudure entre les corps (28, 82) de raccordement et l'enveloppe (10) de l'accumulateur et **en ce que** la liaison (40) par cordon de soudure est produite au moyen d'un procédé de soudage laser ou par faisceau d'électrons.

5. Accumulateur hydraulique suivant l'une des revendications 2 à 4, **caractérisé en ce que** l'un des corps (28, 82) de raccordement a, du côté périphérique extérieur ou intérieur dans la partie des points (80, 98) de passage de fluide, en vue d'un raccordement d'un conduit pour du fluide, une section (78, 90) filetée, comme partie d'une partie (66, 86) de raccordement, qui descend d'une partie (64, 84) de liaison du corps (28, 82) de raccordement, qui sert au moins en partie à mettre le cordon (40) de soudure et qui a la surface (72, 96) périphérique extérieure annulaire.

6. Accumulateur hydraulique suivant l'une des revendications 2 à 5, **caractérisé en ce que** la paroi (36) de l'enveloppe de l'accumulateur, s'étend dans la partie du cordon (40) de soudure de l'autre corps (28) de raccordement, considéré en section transversale, en ligne droite.

7. Accumulateur hydraulique suivant l'une des revendications 2 à 6, **caractérisé en ce que** l'enveloppe (10) de l'accumulateur est de constitution en deux parties, en étant constituée de préférence de parties de coque, et **en ce que** les parties (18, 20) de l'enveloppe de l'accumulateur sont, sur leurs côtés (124) voisins frontaux, reliés par le même procédé de soudure que le sont les corps (28, 82) de raccordement à l'enveloppe (10) de l'accumulateur.
